# EUROPEAN PATENT APPLICATION

(11) **EP 3 632 206 A1**
(43) Date of publication of application: **08.04.2020**
(21) Application number: 18806344.0
(22) Date of filing: 12.06.2018
(51) Int. Cl.: A01M 1/08

(54) **MOSQUITO KILLING ILLUMINATION DEVICE**

(30) Priority: 24.05.2017 CN 201720587543 U
(71) Applicant: Ningbo Dayang Industry And Trade Co., Ltd, Ningbo, Zhejiang 315033 (CN)
(72) Inventor: ZHENG, Jun, Ningbo Zhejiang 315033 (CN); NING, Yuanai, Jiangxi 333100 (CN)
(74) Representative: Longoni, Alessandra
(86) International application number: PCT/CN2018/000222
(87) International publication number: WO 2018/214512

(57) **Abstract**

The present disclosure discloses a mosquito-killing illumination device. The mosquito-killing illumination device comprises a housing and a control unit; the housing comprises an illumination part and a mosquito killing part; an illumination lamp assembly is arranged in the illumination part; a side wall of the mosquito killing part is provided with through holes, through which mosquitoes fly into the mosquito killing part; and a mosquito trapping lamp and a fan are arranged in the mosquito killing part; and the control unit controls operation of the illumination lamp assembly, the mosquito trapping lamp and the fan. The mosquito-killing illumination device has a good mosquito killing effect and prevents users from being bitten by mosquitoes.

## Description

### TECHNICAL FIELD

The present disclosure relates to the field of lighting technologies, or more exactly relates to a mosquito-killing illumination device.

### BACKGROUND

Winged insects such as mosquitoes and the like generally have phototaxis, so flocks of the winged insects may often be found in places where lights are present. To avoid mosquitoes biting and winged insect flocking, various mosquito-killing lamps have been developed. For example, a special mosquito killing lamp uses lights to attract mosquitoes and to kill them by a high voltage electric net as they hit the net; and a small fan, a piece of mosquito repellent incense, an adhesive layer and the like are arranged on a table lamp. All the above mosquito-killing lamps have relatively single mosquito killing manner, so the mosquito killing effect is not ideal, and people cannot get rid of the pain of insect biting.

### SUMMARY

A technical problem to be solved by the present disclosure is to provide a mosquito-killing illumination device, which has good mosquito killing effect and prevents users from being bitten by mosquitoes.

A technical solution of the present disclosure is to provide a mosquito-killing illumination device having the following structure: the mosquito-killing illumination device comprises a housing and a control unit, the housing comprises an illumination part and a mosquito killing part; an illumination lamp assembly is arranged in the illumination part; a side wall of the mosquito killing part is provided with through holes, through which the mosquitoes fly into the mosquito killing part, and a mosquito trapping lamp and a fan are arranged in the mosquito killing part; and the control unit controls operation of the illumination lamp assembly, the mosquito trapping lamp and the fan.

Compared with the prior art, the mosquito-killing illumination device utilizing the above structure of the present disclosure has the following advantages:
The mosquito-killing illumination device of the present disclosure comprises the mosquito killing part so as to not only have an illuminating function, but also have a mosquito killing function. The mosquito trapping lamp and the fan are arranged in the mosquito killing part, the mosquito trapping lamp attracts mosquitoes to come near the device, and the fan sucks the mosquitoes into the housing till the mosquitoes are dried to die. The combined use of the fan and the mosquito trapping lamp has very good mosquito killing effect, is very environmentally friendly, can effectively prevent the mosquitoes from escaping, prevents the user from being bitten by the mosquitoes and improves the sleeping effect of the user.

As an improvement, an opening is formed in the lower end of the housing, and the illumination part is arranged in the lower end part of the housing; and a space defined by the inner wall of the housing and the illumination part is the mosquito killing part. By adopting this structure, the structure is simple, and the design is reasonable.

As an improvement, the mosquito trapping lamp and the fan are arranged in the housing, and the mosquito trapping lamp is located on the upper side of the fan; and an air inlet side of the fan is upward, and an air outlet side of the fan is downward. By adopting this structure, the structure is simple, and the design is reasonable.

As an improvement, the fan comprises a wind wheel and a support, the wind wheel is arranged in the support, and the support is connected to the inner wall of the housing. By adopting this structure, wind can only pass through the wind wheel, and the sucked mosquitoes also can only pass through the wind wheel, so the mosquito killing effect is good.

As an improvement, a mosquito storage box is arranged under the fan in the housing. By adopting this structure, the mosquito storage box can store killed mosquitoes.

As an improvement, the edge of an upper surface of the housing of the illumination part is protruded upwards to form a connecting ring, and the upper end of the connecting ring is connected to the lower end of the fan; and a plurality of ventilation holes are formed in the side wall of the connecting ring. By adopting this structure, the structure is simple, and the design is reasonable.

As an improvement, a space is reserved between the side wall of the illumination part and the inner wall of the housing, and the mosquito storage box is ring-shaped; and the mosquito storage box is locked in the space. By adopting this structure, the structure is simple, the mosquito storage box is convenient to be detached, and mosquitoes in the mosquito storage box can be conveniently cleaned up.

As an improvement, clamping slots with opened upper ends are formed in the outer side wall of the mosquito storage box, clamping blocks are arranged on the inner wall of the housing, and the clamping block are clamped to the clamping slots. By adopting this structure, the connecting structure between the mosquito storage box and the housing is simple, and the assembling is convenient.

As an improvement, a plurality of air holes are formed in the bottom of the mosquito storage box. By adopting this structure, airflow is relatively smooth.

### BRIEF DESCRIPTION OF THE DRAWINGS

FIG. 1 is a schematic diagram of a stereo structure of a mosquito-killing illumination device according to the present disclosure;
FIG. 2 is a schematic diagram of a sectional structure of a mosquito-killing illumination device according to the present disclosure;
FIG. 3 is a schematic diagram of a stereo structure of a housing of a mosquito-killing illumination device according to the present disclosure; and
FIG. 4 is a schematic diagram of a stereo structure of a mosquito storage box of a mosquito-killing illumination device according to the present disclosure.

In the drawings: 1-housing, 101-illumination part, 102-mosquito killing part, 103-through hole, 104-clamping block, 2-mosquito trapping lamp, 3-fan, 301-wind wheel, 302-support, 4-mosquito storage box, 401-clamping slot, 402-air hole, 5-connecting ring, and 501-ventilation hole.

### DESCRIPTION OF THE EMBODIMENTS

The following describes specific embodiments of the present disclosure and further describes the technical solution of the present disclosure with reference to the accompanying drawings, but the present disclosure is not limited to these embodiments.

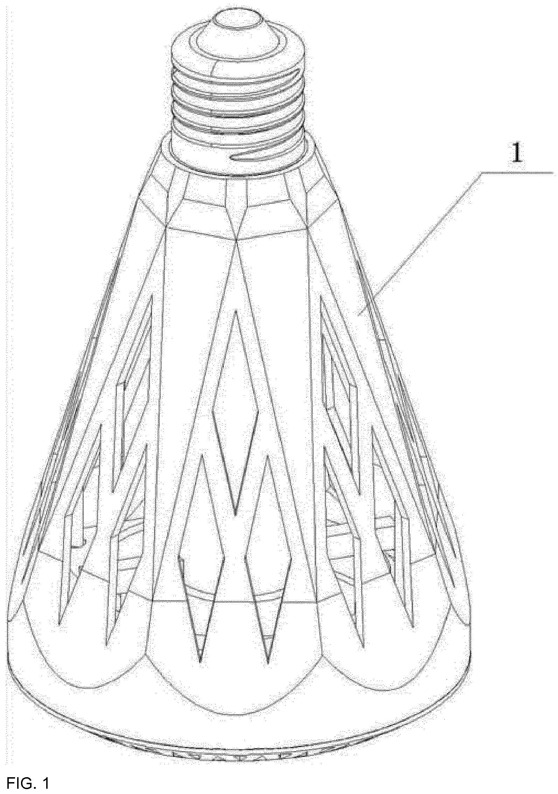

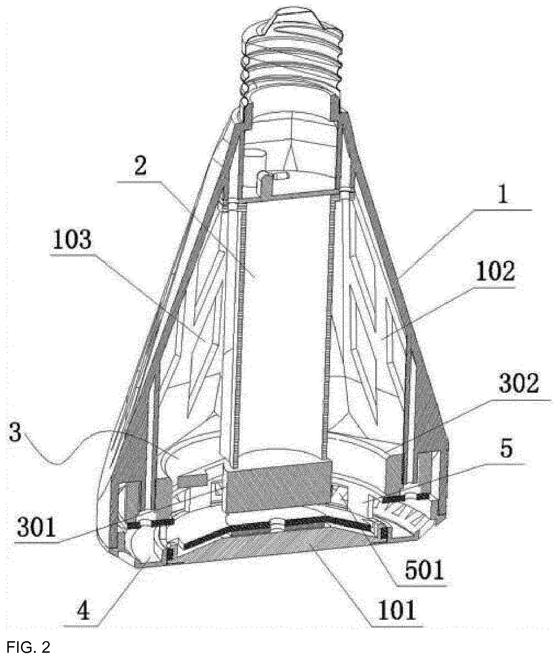

As shown in FIG. 1 and FIG. 2, a mosquito-killing illumination device of the present disclosure comprises a housing 1 and a control unit, the housing 1 comprises an illumination part 101 and a mosquito killing part 102; an illumination lamp assembly is arranged in the illumination part 101; a side wall of the mosquito killing part 102 is provided with through holes 103, through which the mosquitoes fly into the mosquito killing part 102, and a mosquito trapping lamp 2 and a fan 3 are arranged in the mosquito killing part 102; and the control unit controls operation of the illumination lamp assembly, the mosquito trapping lamp 2 and the fan 3.

The mosquito trapping lamp attracts mosquitoes to come near the device, and the fan sucks the mosquitoes into the housing till the mosquitoes are dried to die; and the combined use of the fan 3 and the mosquito trapping lamp 2 has very good mosquito killing effect, is very environmentally friendly, can effectively prevent the mosquitoes from escaping, prevents the user from being bitten by the mosquitoes and improves the sleeping effect of the user.

Based on the above structure, the present disclosure makes a further improvement.

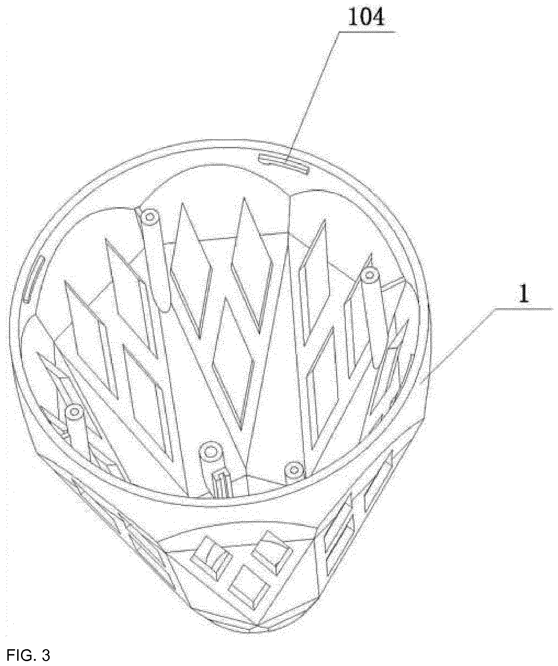

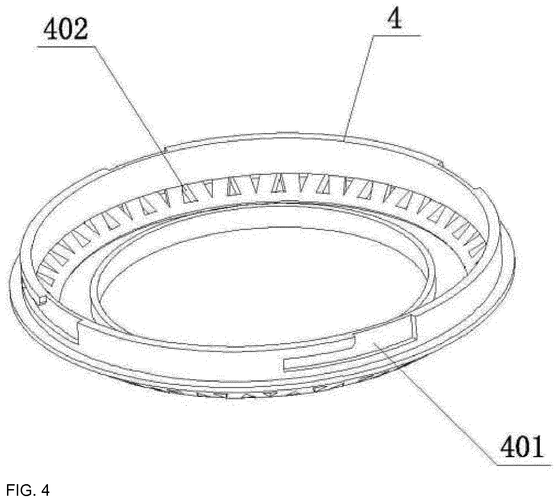

As shown in FIG. 3 and FIG. 4, an opening is formed in the lower end of the housing 1, and the illumination part 101 is arranged in the lower end part of the housing 1; and a space defined by the inner wall of the housing 1 and the illumination part 101 is the mosquito killing part 102. The mosquito trapping lamp 2 and the fan 3 are arranged in the housing 1, and the mosquito trapping lamp 2 is located on the upper side of the fan 3; and an air inlet side of the fan 3 is upward, and an air outlet side of the fan 3 is downward.

The fan 3 comprises a wind wheel 301 and a support 302, the wind wheel 301 is arranged in the support 302, and the support 302 is connected to the inner wall of the housing 1. A mosquito storage box 4 is arranged under the fan 3 in the housing 1.

The edge of an upper surface of the housing 1 of the illumination part 101 is protruded upwards to form a connecting ring 5, and the upper end of the connecting ring 5 is connected with the lower end of the fan 3; and a plurality of ventilation holes 501 are formed in the side wall of the connecting ring 5.

A space is reserved between the side wall of the illumination part 101 and the inner wall of the housing 1, and the mosquito storage box 4 is ring-shaped; and the mosquito storage box 4 is locked in the space. Clamping slots 401 with opened upper ends are formed in the outer side wall of the mosquito storage box 4, clamping blocks 104 are arranged on the inner wall of the housing 1, the clamping blocks 104 are clamped to the clamping slots 401, and the clamping slots are L-shaped. A plurality of air holes 402 is formed in the bottom of the mosquito storage box 4.

A working principle of the mosquito-killing illumination device of the present disclosure is as follows: the mosquito trapping lamp 2 and the fan 3 are turned on, the fan 3 can suck the mosquitoes into the housing 1 so that the mosquitoes are dried to die, and the mosquito trapping lamp 2 kills the mosquitoes by electric shock. The died mosquitoes fall in the mosquito storage box 4. After a certain amount of mosquitoes are accumulated in the mosquito storage box 4, the mosquito storage box 4 can be detached to clean up the mosquitoes.

A controlling method of the control unit of the mosquito-killing illumination device of the present disclosure is as follows:
when lighting is required, a switch connected with the control unit is pressed once to trigger the switch at a first grade, and the control unit controls the illumination lamp to turn on so as to enable an illumination function;
when lighting and a mosquito killing function are required at the same time, the switch is pressed again to trigger the switch at a second grade, and the control unit controls the mosquito trapping lamp to turn on and controls the fan to operate so as to enable the mosquito killing function while the lighting is turned on;
when the mosquito killing function is required but the lighting is not required, the switch is pressed again to trigger the switch at a third grade, the control unit controls the illumination lamp to turn off, but the mosquito trapping lamp is turned on and the fan still operates, so as to enable the mosquito killing function while the lighting is turned off; and
the switch is pressed again to trigger the switch at a fourth grade, and the control unit controls the mosquito trapping lamp to turn off and controls the fan to stop operating so as to turn off the lighting and close the mosquito killing function.

## Claims

1. A mosquito-killing illumination device, **characterized by** comprising a housing and a control unit, wherein the housing comprises an illumination part and a mosquito killing part; an illumination lamp assembly is arranged in the illumination part; a side wall of the mosquito killing part is provided with through holes, through which the mosquitoes fly into the mosquito killing part, and a mosquito trapping lamp and a fan are arranged in the mosquito killing part; and the control unit controls operation of the illumination lamp assembly, the mosquito trapping lamp and the fan.

2. The mosquito-killing illumination device according to claim 1, **characterized in that** an opening is formed in the lower end of the housing, and the illumination part is arranged in the lower end part of the housing; and a space defined by the inner wall of the housing and the illumination part is the mosquito killing part.

3. The mosquito-killing illumination device according to claim 2, **characterized in that** the mosquito trapping lamp and the fan are arranged in the housing, and the mosquito trapping lamp is located on the upper side of the fan; and an air inlet side of the fan is upward, and an air outlet side of the fan is downward.

4. The mosquito-killing illumination device according to claim 3, **characterized in that** the fan comprises a wind wheel and a support, the wind wheel is arranged in the support, and the support is connected to the inner wall of the housing.

5. The mosquito-killing illumination device according to claim 3, **characterized in that** a mosquito storage box is arranged under the fan in the housing.

6. The mosquito-killing illumination device according to any one of claims 3 to 5, **characterized in that** the edge of an upper surface of the housing of the illumination part is protruded upwards to form a connecting ring, and the upper end of the connecting ring is connected to the lower end of the fan; and a plurality of ventilation holes are formed in the side wall of the connecting ring.

7. The mosquito-killing illumination device according to claim 5, **characterized in that** a space is reserved between the side wall of the illumination part and the inner wall of the housing, and the mosquito storage box is ring-shaped; and the mosquito storage box is locked in the space.

8. The mosquito-killing illumination device according to claim 7, **characterized in that** clamping slots with opened upper ends are formed in the outer side wall of the mosquito storage box, clamping blocks are arranged on the inner wall of the housing, and the clamping block are clamped to the clamping slots.

9. The mosquito-killing illumination device according to claim 7 or 8, **characterized in that** a plurality of air holes are formed in the bottom of the mosquito storage box.
